# EUROPÄISCHE PATENTSCHRIFT

(11) **EP 3 744 587 B1**
(45) Veröffentlichungstag und Bekanntmachung des Hinweises auf die Patenterteilung: **25.10.2023**
(21) Anmeldenummer: 20176247.3
(22) Anmeldetag: 25.05.2020
(51) Int. Cl.: B60T 7/20, B60T 8/18, B60T 13/26, B60T 13/66

(54) **BREMSANLAGE FÜR EINE LANDWIRTSCHAFTLICHE ARBEITSMASCHINE SOWIE LANDWIRTSCHAFTLICHER ZUGVERBUND, UMFASSEND EINE ZUGMASCHINE UND WENIGSTENS EINE DAMIT GEKOPPELTE ARBEITSMASCHINE**
BRAKE SYSTEM FOR AN AGRICULTURAL MACHINE AND AGRICULTURAL ASSEMBLY COMPRISING A TRACTOR AND AT LEAST ONE MACHINE COUPLED THERETO
SYSTÈME DE FREINAGE POUR UNE MACHINE DE TRAVAIL AGRICOLE AINSI QU'ENSEMBLE DE TRACTION AGRICOLE, COMPRENANT UN TRACTEUR ET AU MOINS UNE MACHINE DE TRAVAIL COUPLÉE AUDIT TRACTEUR

(30) Priorität: 28.05.2019 DE 102019114345
(43) Veröffentlichungstag der Anmeldung: 02.12.2020
(73) Patentinhaber: Horsch Maschinen GmbH, 92421 Schwandorf (DE)
(72) Erfinder: BODENSTEINER, Thomas, 92421 Schwandorf (DE); KRONES, Manuel, 92421 Schwandorf (DE); HASELHOFF, Alexander, 92421 Schwandorf (DE)
(74) Vertreter: Benninger, Johannes

(56) Entgegenhaltungen:
- WO-A1-00/53479
- DE-U- 1 871 081

## Beschreibung

Die vorliegende Erfindung betrifft eine pneumatische, hydraulische oder ähnliche Bremsanlage, eine damit ausgestattete landwirtschaftliche Arbeitsmaschine sowie einen landwirtschaftlichen Zugverbund, umfassend eine Zugmaschine und wenigstens eine damit gekoppelte Arbeitsmaschine mit pneumatischer, hydraulischer oder ähnlicher Bremsanlage.

Eine solche Bremsanlage ist aus DE 1871081 U bekannt.

Im Zusammenhang mit landwirtschaftlichen Arbeitsaufgaben sind die unterschiedlichsten Fahrten zu bewältigen, die naturgemäß in vielen Fällen auf öffentlichen Straßen stattzufinden haben. Solche Fahrten können z.B. Überführungsfahrten für selbstfahrende oder an eine landwirtschaftliche Zugmaschine angehängte Arbeitsmaschinen sein.

Typische landwirtschaftliche Anhänger können gezogene Arbeitsmaschinen sein, deren primäre Verwendung nicht der Transport von Gütern und/oder Betriebsstoffen ist, sondern die ausschließlich der Ausführung von landwirtschaftlichen Arbeiten dienen, etwa dem Säen, Spritzen, Grubbern oder Schwadern.

Während in der entfernteren Vergangenheit nicht nur die Maschinen- und Fahrzeuggewichte vergleichsweise gering und zudem die Fahrgeschwindigkeiten bei Straßenfahrten noch kaum mehr als etwa 20 bis maximal 25 km/h betrugen, haben nicht nur die Fahrzeuge und Arbeitsmaschinen zunehmend an Größe und Gewicht zugelegt. Auch die mit modernen landwirtschaftlichen Fahrzeugen erzielbaren Fahrgeschwindigkeiten liegen inzwischen weitaus höher als in der Vergangenheit. Alle diese Faktoren tragen gemeinsam dazu bei, dass an die Leistungsfähigkeit und Zuverlässigkeit der heute verwendeten Bremssysteme deutlich höhere Anforderungen gestellt werden müssen, als dies in der Vergangenheit der Fall war.

Während Arbeitsmaschinen, die mit kleinen Achslasten und die mit relativ niedriger Fahrgeschwindigkeit bewegt werden, auch ohne eigene Bremssysteme betrieben werden können, da die notwendige Verzögerung durch das Bremsen des Zugfahrzeuges erreicht wird, ist dies bei höheren Fahrgeschwindigkeiten und/oder größeren Achs- bzw. Anhängelasten der Arbeitsmaschine keine sinnvolle Option, da hierbei die Gefahr besteht, die Betriebsbremsen des Zugfahrzeuges zu überlasten. Zudem besteht die Gefahr, dass es bei höheren Achs- und Anhängelasten zu einem Überschieben der Zugmaschine kommt, woraus eine erhebliche Unfallgefahr resultiert.

Nicht nur die im landwirtschaftlichen Einsatz verwendeten höheren Anhängermassen und Fahrgeschwindigkeiten führen zu erhöhten Anforderungen. Auch Kompatibilitäten müssen beachtet werden, denn nicht alle älteren Zugmaschinen lassen sich mit neueren Anhängern problemlos betreiben, was auch umgekehrt - neue Zugmaschine und älterer Anhänger - gilt. Entsprechend der geltenden EU-Verordnung 167/2013 sowie der darauf Bezug nehmenden Verordnung (EU) 2015/68 über die Bremsanlagen (RVBR) müssen die Bremsanlagen von Traktoren und Anhängefahrzeugen bestimmte Kriterien erfüllen, womit nicht zuletzt eine erhöhte Verkehrssicherheit angestrebt wird. Entsprechend dieser aktuell geltenden europäischen Bestimmungen wurde das Bremsband, die Vorgabe der Bandbreite für den Druckanstieg in Abhängigkeit von der Verzögerung, neu festgelegt.

Die angesprochenen rechtlichen Vorgaben aus der Verordnung (EU) 2015/68 führen bei landwirtschaftlichen Arbeitsmaschinen, die über keine Beladungsmöglichkeiten für Transport- oder Verbrauchsgüter verfügen, wie dies z.B. für Grubber, Sämaschinen oder dergleichen der Fall ist, dazu, dass der Gewichtsbereich, für den sich eine Bremseinstellung innerhalb des rechtlichen Rahmens bewegt, sehr klein ist. Es ist jedoch der Natur der Anwendung dieser Produkte geschuldet, dass dem Kunden eine sehr hohe Anzahl verschiedener Ausstattungs- und Konfigurationsoptionen angeboten werden, so dass für jegliche Einsatzbedingungen das jeweils optimal abgestimmte Produkt angeboten werden kann.

Es ist daher die Regel, dass eine Baureihe in diesem Produktsegment eine sehr große Differenz zwischen den Gesamtgewichten und den Achslasten in der Minimal- und in der Maximalausstattung aufweist. Um die Einhaltung des jeweils vorgeschriebenen Bremsbandes gewährleisten zu können, müssen daher ab Werk ausstattungsabhängig verschiedene Bremszylindergrößen in Kombination mit unterschiedlichen Bremshebellängen verbaut werden. Dies führt jedoch zwangsläufig zu einem erhöhten Aufwand sowohl für die Lagerhaltung und Logistik als auch zu einem deutlich erhöhten Montageaufwand bei der Fertigung.

Angesichts der genannten praktischen Probleme hat es sich die vorliegende Erfindung zur Aufgabe gemacht, ein vergleichsweise einfach aufgebautes und damit auch kostengünstig realisierbares System für pneumatische oder hydraulische Betriebsbremsen für landwirtschaftliche Arbeitsmaschinen bzw. eine pneumatische oder hydraulisch arbeitende Bremsanlage zur Verfügung zu stellen, die mit geringem Aufwand an ausstattungsabhängige Gesamtgewichte und Achslasten anpassbar und bei nachträglicher Änderung der Ausstattungskonfiguration einfach nachjustierbar ist.

Zudem besteht ein weiterer Teilaspekt der Aufgabe darin, dass die Bremsanlage möglichst einfach hinsichtlich Lagerhaltung, Kommissionierung und Montageaufwand handzuhaben ist.

Diese Aufgaben werden mit den Gegenständen der unabhängigen Ansprüche gelöst. Merkmale vorteilhafter Weiterbildungen der Erfindung lassen sich den jeweiligen abhängigen Ansprüchen entnehmen.

Zur Lösung der genannten Aufgabe schlägt die vorliegende Erfindung eine mit pneumatischem oder hydraulischem Druck arbeitende Bremsanlage für eine landwirtschaftliche Arbeitsmaschinen mit den Merkmalen des unabhängigen Anspruchs vor, wobei diese Bremsanlage grundsätzlich für die unterschiedlichsten Varianten von gebremsten landwirtschaftlichen Arbeitsmaschinen vorgesehen sein kann.

Bei dem erfindungsgemäßen Bremssystem ist ein mechanisch gesteuerter automatisch lastabhängiger Bremskraftregler zur bremskraftabhängigen Vorgabe einer Betätigungskraft von wenigstens zwei Rädern einer Maschinenachse zugeordneten Bremszylindern vorgesehen. Hierbei kann eine Eingangsstellgröße zur lastabhängigen Variation und/oder Drosselung eines Steuerdrucks der Bremszylinder manuell vorgegeben werden, insbesondere in Abhängigkeit von einem ausstattungsabhängigen Gesamtgewicht bzw. von der ausstattungsabhängigen Achslast einer landwirtschaftlichen Maschine.

Es wird bei der vorliegenden Erfindung also der Ansatz verfolgt, die geforderte Regulierung der Bremskraft mit steigendem oder sinkendem Fahrzeuggewicht nicht mehr über unterschiedlich große Bremszylinder oder unterschiedlich lange Bremshebel zu erreichen, sondern über eine Regelung des Steuerdrucks. Auf diese Weise ist es möglich, im gesamten Achslastbereich zwischen ausstattungsabhängiger Minimal- und Maximalachslast die Anforderungen aus Verordnung (EU) 2015/68 zu erfüllen und gleichzeitig Montage und Lagerhaltung deutlich zu vereinfachen.

Bei der erfindungsgemäßen Bremsanlage ist dem insbesondere pneumatisch angesteuerten Anhängerbremsventil ein manuell verstellbarer Automatisch lastabhängiger Bremskraftregler vorgeschaltet, der eine manuell einstellbare Variation, insbesondere eine gestufte oder variable Begrenzung der dem Anhängerbremsventil als Eingangsstellgröße zur Verfügung gestellten Steuerdrucks ermöglicht. Auf diese Weise kann die Eingangsstellgröße zur Ansteuerung des Anhängerbremsventils mittels des vorgeschalteten Automatisch lastabhängigen Bremskraftreglers variiert werden.

Insbesondere kann der Automatisch lastabhängige Bremskraftregler einen manuell betätigbaren Stellhebel aufweisen, der entlang einer Kulisse verschiebar oder verschwenkbar ist, die mindestens eine Werteskala zur Definition wenigstens einer diskreten Position des Stellhebels und damit im Zusammenhang stehender Druckregelverhältnisse aufweist. Diese Kulisse kann austauschbar an einem Gehäuse eines zumindest den Automatisch lastabhängigen Bremskraftregler enthaltenden Bremsmoduls angeordnet sein.

Die Werteskala kann derart ausgestaltet sein, dass mehrere Gewichtsbereiche dargestellt sind, wobei der erste Wertebereich in der Regel mit der ausstattungsabhängigen Minimalachslast beginnt und der letzte Wertebereich in der Regel mit der ausstattungsabhängigen Maximalachslast endet. Auf diese Weise ist es möglich, dass durch ein Justieren des Stellhebels in den jeweiligen Gewichtsbereich auf der Skala, welcher der tatsächlichen Achslast der Arbeitsmaschine entspricht, das Ansprechverhalten der Bremsanlage im Rahmen der Verordnung (EU) 2015/68 gewährleistet ist.

Die Kulisse ist zweckmäßig gemäß einer weiteren Ausführungsvariante insbesondere derartig ausgeführt, dass der Stellhebel stufenlos entlang der Kulisse verstellt werden kann. Hierdurch wird erreicht, dass der lastabhängige Bremskraftregler beliebig auf jegliche Stellung eingestellt werden kann.

Sinnvollerweise ist die Kulisse hinter einer Abdeckung angeordnet, da bei landwirtschaftlichen Arbeitsmaschinen, die über keine Möglichkeit zur Zuladung verfügen, gemäß Verordnung (EU) 2015/68 keine nachträgliche Justierung der Bremse beim Kunden erfolgen darf. Eine solche nachträgliche Justierung ist auch gar nicht mehr notwendig, denn die jeweils gewählte Hebelstellung ist auf den festgelegten Ausstattungszustand und die davon abhängige Achslast bzw. Gesamtmasse der landwirtschaftlichen Arbeitsmaschine abgestimmt. Letztlich dient die Einstellung des Ansprechverhaltens der Bremse durch Justierung des Stellhebels primär der Vereinfachung der Produktion.

Sinnvollerweise kann die Möglichkeit bestehen, die gewählte Stellung des Stellhebels zu fixieren und gegen nachträgliche Veränderungen zu sichern, bspw. zu verplomben, so dass eine nachträgliche Manipulation an der werksseitigen Bremseinstellung umgehend sichtbar wird. Die auf der Kulisse dargestellten Gewichtsbereiche können für das gesamte Ausstattungsspektrum einer Arbeitsmaschinen-Baureihe vorab berechnet werden.

Bei der Fertigung der landwirtschaftlichen Bodenbearbeitungsmaschine erfolgt der Einbau der vorab berechneten Kulisse, das Justieren des Stellhebels und das anschließende Fixieren oder Verplomben der Stellhebelposition.

Bei einer möglichen Nachrüstung von Optionen/Ausstattungen erfolgt das Nachjustieren des Stellhebels auf die gestiegene bzw. gesunkene Achslast sowie anschließend das Verplomben der gewählten Stellung.

Zur Lösung der oben definierten Aufgabe schlägt die Erfindung zudem ein Verfahren zur Einstellung einer mit pneumatischem Druck arbeitenden Bremsanlage für eine landwirtschaftliche Bodenbearbeitungsmaschine vor, die mit einem Anhängerbremsventil zur bremskraftabhängigen Vorgabe einer Betätigungskraft von wenigstens zwei Rädern einer Maschinenachse zugeordneten Bremszylindern ausgestattet ist. Eine Eingangsstellgröße zur lastabhängigen Variation und/oder Drosselung eines Steuerdrucks der Radbremszylinder wird dabei mittels eines einstellbaren Automatisch lastabhängigen Bremskraftreglers manuell vorgegeben, und zwar insbesondere in Abhängigkeit von einem aktuellen Gewicht oder einer aktuellen Achslast und/oder von einem Ausstattungszustand der landwirtschaftlichen Arbeitsmaschine.

Bei dem Verfahren kann somit dem insbesondere pneumatisch angesteuerten Anhängerbremsventil ein manuell verstellbarer Automatisch lastabhängiger Bremskraftregler vorgeschaltet sein, der eine manuell einstellbare Variation, insbesondere eine gestufte oder variable Begrenzung der dem Anhängerbremsventil als Eingangsstellgröße zur Verfügung gestellten Steuerdrucks ermöglicht. Die Eingangsstellgröße zur Ansteuerung des Anhängerbremsventils kann mittels des vorgeschalteten Automatisch lastabhängigen Bremskraftreglers variiert werden.

Das Verfahren kann vorsehen, dass der Automatisch lastabhängige Bremskraftregler einen manuell betätigbaren Stellhebel o. dgl. aufweist, der entlang einer Kulisse verschiebar oder verschwenkbar ist, die mindestens eine Werteskala zur Definition wenigstens einer diskreten Position des Stellhebels und damit im Zusammenhang stehender Druckregelverhältnisse aufweist. Wie oben schon beschrieben, kann diese Kulisse austauschbar an einem Gehäuse eines zumindest den Automatisch lastabhängigen Bremskraftregler enthaltenden Bremsmoduls angeordnet sein. Zudem kann die Werteskala derart ausgestaltet sein, dass mehrere Gewichtsbereiche dargestellt sind, wobei der erste Wertebereich in der Regel mit der ausstattungsabhängigen Minimalachslast beginnt und der letzte Wertebereich in der Regel mit der ausstattungsabhängigen Maximalachslast endet.

Auf diese Weise ist es möglich, dass durch justieren des Stellhebels in den jeweiligen Gewichtsbereich auf der Skala, welcher der tatsächlichen Achslast der Arbeitsmaschine entspricht das Ansprechverhalten der Bremsanlage im Rahmen der Verordnung (EU) 2015/68 gewährleistet ist.

Außerdem ermöglichen es diese austauschbaren Kulissen mit den unterschiedlichen Werteskalen, nach Bestimmung des aktuellen Ausstattungs- und/oder Belastungszustand eine jeweils passende Kulisse auszuwählen, in der Bremsanlage einzubauen und den Stellhebel nach Einstellung der passenden Position, die von der jeweiligen Werteskala der eingesetzten Kulisse vorgegeben ist, in seiner Position zu fixieren, wobei der Stellhebel vorzugsweise anschließend gegen nachträgliche manuelle Veränderungen abgesichert wird, insbesondere durch Verplomben. Auf diese Weise kann jede nachträgliche Manipulation an der werksseitigen Bremseinstellung umgehend sichtbar gemacht werden, da hierfür die Verplombung zerstört werden musste.

Die vorliegende Erfindung bezieht sich weiterhin auf eine landwirtschaftliche Arbeitsmaschine, die über mindestens eine Achse und mindestens ein gebremstes Rad verfügt, und die mit einer mit pneumatischem Druck oder mit hydraulischem Druck arbeitenden Bremsanlage gemäß einer der zuvor beschriebenen Ausführungsvarianten ausgestattet ist. Wahlweise kann diese Bodenbearbeitungsmaschine auch über mindestens zwei Achsen und wenigstens zwei gebremste Räder verfügen.

Schließlich umfasst die Erfindung auch einen landwirtschaftlichen Zugverbund, umfassend eine landwirtschaftliche Zugmaschine und eine daran angehängte und damit mechanisch sowie pneumatisch gekoppelte landwirtschaftliche Arbeitsmaschine, wie sie zuvor definiert wurde, die mit einer mit pneumatischem Druck oder mit hydraulischem Druck arbeitenden Bremsanlage gemäß einer der zuvor beschriebenen Ausführungsvarianten ausgestattet ist.

Im Folgenden sollen Ausführungsbeispiele die Erfindung und ihre Vorteile anhand der beigefügten Zeichnungen näher erläutern.
Fig. 1 zeigt ein schematisches Pneumatikschaltbild eines erfindungsgemäßen Bremssystems für eine landwirtschaftliche Bodenbearbeitungsmaschine.
Fig. 2A zeigt eine Ausführungsvariante eines Bremsmoduls, umfassend ein Gehäuse mit darin befindlichen Komponenten der Bremsanlage gemäß Fig. 1 sowie einen außen am Gehäuse angeordnet Stellhebel mit Kulisse.
Fig. 2B zeigt einen Innenaufbau des Bremsmoduls gemäß Fig. 2A mit seinen einzelnen Komponenten und ohne Gehäuse.

Die dargestellte Ausführungsform soll lediglich ein praktisch einsetzbares Beispiel darstellen, wie das erfindungsgemäße Bremssystem ausgestaltet sein kann, soll aber keine abschließende Begrenzung darstellen.

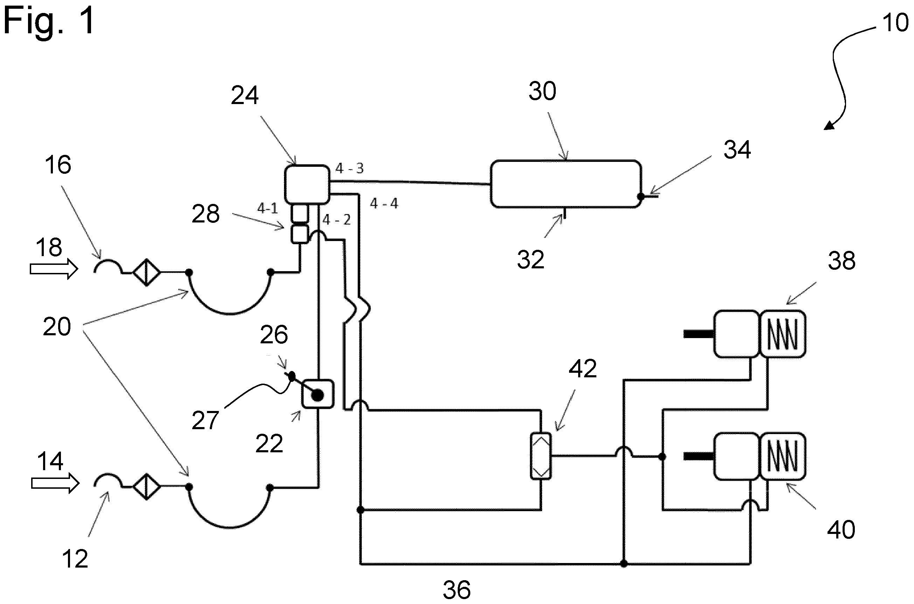

Die Fig. 1 zeigt ein schematisches Pneumatikschaltbild einer sinnvollen Ausführungsvariante eines erfindungsgemäßen Bremssystems in Form einer Druckluftbremsanlage für eine Arbeitsmaschine, die insbesondere für einen landwirtschaftlichen Einsatz vorgesehen sein kann, bspw. für eine gezogene landwirtschaftliche Arbeitsmaschine.

Hierbei kann eine Eingangsstellgröße zur lastabhängigen Variation und/oder Drosselung eines Steuerdrucks der Bremszylinder manuell vorgegeben werden, insbesondere in Abhängigkeit von einem ausstattungsabhängigen Gesamtgewicht bzw. von der ausstattungsabhängigen Achslast der hier nicht gezeigten landwirtschaftlichen Maschine. Mit der Bremsanlage wird der Ansatz verfolgt, die geforderte Regulierung der Bremskraft mit steigendem oder sinkendem Fahrzeuggewicht nicht mehr über unterschiedlich große Bremszylinder oder unterschiedlich lange Bremshebel zu erreichen, sondern über eine Regelung des Steuerdrucks. Auf diese Weise ist es möglich, Montage und Lagerhaltung deutlich zu vereinfachen.

Die gesamte Bremsanlage ist hierbei mit der Bezugsziffer 10 gekennzeichnet. Die landwirtschaftliche Arbeitsmaschine selbst ist in der Darstellung nicht erkennbar, ebenso wenig wie ein ggf. notwendiges Zugfahrzeug, mit dem die Arbeitsmaschine mechanisch, hydraulisch und pneumatisch sowie typischerweise auch elektrisch gekoppelt werden kann. Die übrigen Komponenten, die auf dem Schaltbild erkennbar sind, werden nachfolgend in ihrer Funktion sowie in ihrer Zusammenwirkung untereinander erläutert.

Die Bezugsziffer 12 bezeichnet in der Fig. 1 einen Steuerdruckanschluss, der in der Praxis oftmals auch als "Kupplungskopf gelb" bezeichnet und entsprechend farbig gekennzeichnet ist. Über diesen ersten Druckanschluss 12 mit nachgeschaltetem Luftfilter wird die pneumatische Bremsanlage 10 mit Steuerdruck 14 versorgt, welcher der Betätigung der nachfolgend näher erläuterten Radbremsventile dient.

Eine weitere pneumatische Schnittstelle der Bremsanlage 10 ist durch einen zweiten Druckanschluss 16 gebildet, der als Vorratsdruckanschluss 16 fungiert und im weiteren Zusammenhang auch als solcher bezeichnet wird. In der Praxis wird dieser Vorratsdruckanschluss 16 auch als "Kupplungskopf rot" bezeichnet und kann entsprechend farbig gekennzeichnet sein. Auch diesem zweiten Druckanschluss 16 ist ein Luftfilter nachgeschaltet. Der zweite Druckanschluss 16 dient der Versorgung mit Vorratsdruck 18.

Sowohl der erste Druckanschluss 12 als auch der zweite Druckanschluss 16 können in der Praxis bspw. jeweils durch genormte Kupplungsköpfe entsprechend DIN ISO 1728 ausgeführt sein.

Über eine Schlauchleitung 20 ist der erste Druckanschluss 12 mit einem Automatisch lastabhängigen Bremskraftregler 22 gekoppelt, der im vorliegenden Zusammenhang auch kurz als ALB 22 bezeichnet wird. Somit kann über den ersten Druckanschluss 12 bzw. über den "Kupplungskopf gelb" und den ALB 22 ein definierter und verstellbarer Steuerdruck zu einem Anschluss 4-2 eines Anhängerbremsventils 24 übertragen werden.

Als Schlauchleitungen 20 eignen sich bspw. Pneumatikleitungen, die der DIN 74310 entsprechen.

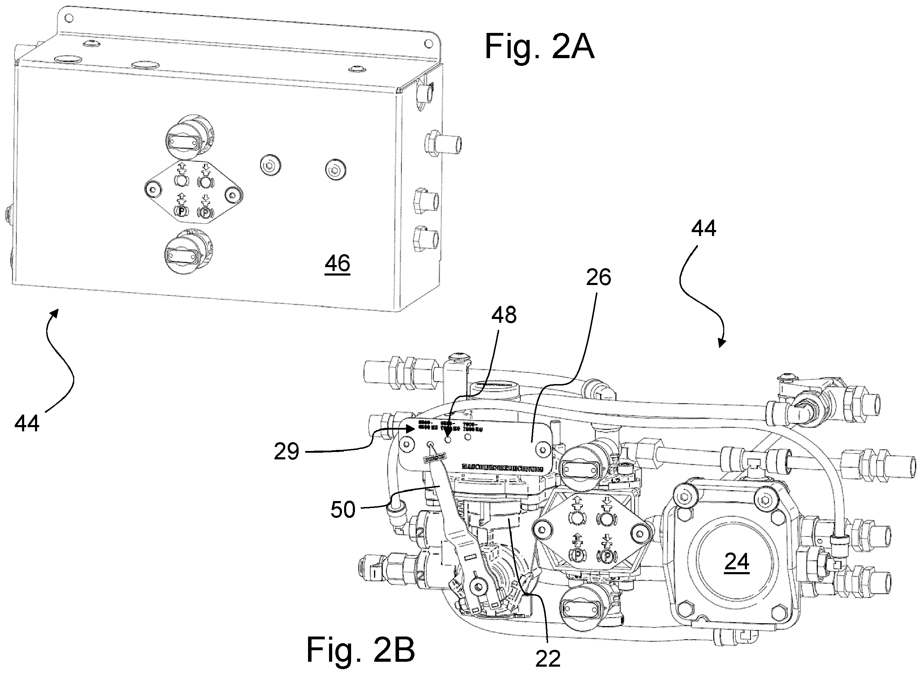

Der Automatisch lastabhängige Bremskraftregler 22 weist eine in den Figuren 2A und 2B näher erläuterte Kulisse 26 mit Stellhebel auf. Mittels des mit der Kulisse 26 zusammenwirkenden Stellhebels kann bedarfsweise und abhängig vom Ausstattungszustand des Fahrzeugs und damit abhängig vom Gesamtgewicht der Steuerdruck 14 reguliert bzw. reduziert werden, um die gewünschten Bremseigenschaften der pneumatischen Bremsanlage 10 zu erreichen.

Über eine weitere Schlauchleitung 20 ist der zweite Druckanschluss 16 bzw. der "Kupplungskopf rot" an einem Anschluss 4-1 des Anhängerbremsventils 24 angeschlossen. Dieser Anschluss 4-1 befindet sich an einem Doppellöseventil 28 der Betriebs- und Feststellbremse und dient zur Versorgung des Doppellöseventils 28 mit dem Vorratsdruck 18 zur Speisung eines Druckkessels 30. Bei am zweiten Druckanschluss 16 anliegendem Vorratsdruck 18 wird durch das Anhängerbremsventil 24 über den Anschluss 4-3 der Druckkessel 30 befüllt.

Am Druckkessel 30 ist ein Entwässerungsventil 32 sowie ein Prüfanschluss 34 erkennbar. Dieser Prüfanschluss kann bspw. der ISO 3583:1984 entsprechen.

Eine Bremsleitung 36 der Betriebsbremse verläuft von einem Anschluss 4-4 des Anhängerbremsventils 24 zu den Membranteilen der Federspeicherbremszylinder 38 und 40. Der notwendige Druck zur Belüftung der Federspeicher in den Bremszylindern 38 und 40 wird aus der Vorratsleitung abgezweigt. Die Luft gelangt dabei über das Doppellöseventil 28 der Betriebs- und Feststellbremse zu einem Zweiwegeventil 42 und von dort in den Federspeicherteil der Bremszylinder 38 und 40. Auf diese Weise wird der Federdruck entlastet und die Feststellbremse gelöst.

Um eine Überlastung der Bremse durch das gleichzeitige Einwirken der Betätigungskräfte der Feststell- und Betriebsbremse zu verhindern, ist die Bremsleitung 36 der Betriebsbremse ebenfalls über das Zweiwegeventil 42 mit den Federspeicherteilen der Bremszylinder 38 und 40 verbunden. Dadurch kann die komprimierte Luft in den jeweiligen Federspeicherteil der Bremszylinder 38 und 40 strömen und diesen öffnen, während gleichzeitig die Betriebsbremse angesteuert wird.

Die Betriebsbremse wird dadurch betätigt, dass bei anliegendem Steuerdruck am Anschluss 4-2 und gleichzeitig anliegendem Vorratsdruck an den Anschlüssen 4-1 oder 4-3 des Anhängerbremsventils 24 die Bremszylinder 38 und 40 über den Abführanschluss 4-4 mit Betriebsdruck gespeist werden. Das ALB 22 regelt den dem Anhängerbremsventil 24 zur Verfügung gestellten Steuerdruck in Abhängigkeit von der gewählten Position des Stellhebels (vgl. Fig. 2).

Hierbei ist die Verwendung einer Kulisse 26 mit einer für die jeweiligen Gewichtszustände der Maschine vordefinierten Skala 29 für den Stellhebel möglich. Am Anhängerbremsventil 24 erfolgt anschließend eine weitere Regelung der Höhe des an die Bremszylinder 38 und 40 abzugebenden Betriebsdrucks in Abhängigkeit vom jeweils eingehenden Steuerdruck.

Bei nicht anliegendem Steuerdruck und gleichzeitig anliegendem Vorratsdruck erfolgt keine Bremsung, so dass in diesem Betriebszustand ausschließlich der Druckkessel 30 gespeist wird. Bei nicht anliegendem Vorratsdruck ist die Betriebsbremse betätigt. Über das Doppellöseventil 28 der Betriebs- und Feststellbremse kann die Betriebsbremse bedarfsweise gelöst werden.

Die Aktivierung der Feststellbremse wird nachfolgend erläutert. Bei abgekoppelten Steuer- und Vorratsleitungen 12 und 16 und noch vorhandenem Vorratsdruck erfolgt weiterhin die Bremsung der Maschine über die Betriebsbremse. Soll die Bremsung über die Federspeicher der Bremszylinder 38 und 40 erfolgen, müssen die Federspeicher über das Doppellöseventil 28 der Betriebs- und Feststellbremse entlüftet werden. Sinkt der Druck im Druckkessel 30, beginnen die Federspeicher der Bremszylinder 38 und 40 ab einem bestimmten Druckgrenzwert langsam einzufallen; die Feststellbremse ist eingelegt. Dieser Druckgrenzwert kann bspw. bei ca. 4,8 bar liegen.

Soll die Feststellbremse bei nicht angeschlossenem Vorratsdruck gelöst werden, muss der Druckkessel 30 ausreichend befüllt und das Doppellöseventil 28 der Betriebs- und Feststellbremse manuell betätigt werden. Ist kein ausreichender Druck im Druckkessel 30 vorhanden, können die Federspeicher wahlweise über eine mechanische Vorrichtung an den Bremszylindern 38 und 40 gelöst werden.

Aus Vereinfachungsgründen zeigt die Fig. 1 lediglich zwei Bremszylinder 38 und 40 einer Achse der gezogenen landwirtschaftlichen Arbeitsmaschine, der oder die wahlweise zwei oder drei Achsen mit jeweils den Rädern aller Achsen zugeordneten gleichartigen Bremszylindern 38 bzw. 40 aufweisen kann, die in entsprechender Weise vom ALB 22 mit variabel einstellbarem Bremsdruck beaufschlagt werden können. Die Bremszylinder 38 und 40 sorgen für eine gleichmäßige und vom jeweiligen Steuerdruck abhängige Betätigung der Radbremsen des Anhängers (hier nicht gezeigt) oder der landwirtschaftlichen Arbeitsmaschine (hier ebenfalls nicht gezeigt).

Dem Stellhebel 26 ist weiterhin eine Fixierung der gewählten Hebelstellung in Form einer Plombe 27 zugeordnet, mit welcher der Stellhebel 26 in der gewählten Position festgestellt und/oder anschließend abgedeckt werden kann, damit keine nachträgliche Justierung der Bremse beim Kunden mehr erfolgen kann. Eine solche nachträgliche Justierung ist auch gar nicht mehr notwendig, denn die vorab definierte Kulisse 26 ist auf den festgelegten Ausstattungszustand und die davon abhängige Achslast bzw. Gesamtmasse der landwirtschaftlichen Bodenbearbeitungsmaschine abgestimmt.

Die beiden schematischen Perspektivansichten der Figuren 2A und 2B zeigen eine beispielhafte Ausgestaltung eines Bremsmoduls 44 mit einem Gehäuse 46, in dem das Anhängerbremsventil 24 mit seinen in Fig. 1 erläuterten Anschlüssen sowie auch das ALB 22 in unmittelbarer Nähe zum Anhängerbremsventil 24 untergebracht sind. Während die Ansicht der Fig. 2A das geschlossene Gehäuse 46 zeigt, verdeutlicht die Fig. 2B in einer freigelegten Darstellung (ohne Gehäuse) die räumliche Anordnung des ALB 22 und des Anhängerbremsventils 24 innerhalb des Bremsmoduls 44.

Beide Ansichten zeigen zudem die oben erwähnte Kulisse 26 mit der für die jeweiligen Gewichtszustände der Maschine vordefinierten Skala 29 für den Stellhebel 50, die mehrere Einrastpunkte 48 für den schwenkbaren Stellhebel 50 bietet, so dass dieser in eine definierte Position gebracht werden kann, die der ausstattungsbedingten Gesamtmasse der betriebsbereiten landwirtschaftlichen Arbeitsmaschine entspricht. Die mit der Kulisse 26 definierten und auf ihrer Skala oder Werteskala 29 dargestellten Gewichtsbereiche der Maschine können für das gesamte Ausstattungsspektrum der Arbeitsmaschinen-Baureihe vorab berechnet werden.

In Abhängigkeit von der durch die ausgewählte Kulisse 26 definierten Position des Stellhebels 50 wird im ALB 22 der dem benachbarten Anhängerbremsventil 24 zur Verfügung gestellte Steuerdruck geregelt. Am Anhängerbremsventil 24 erfolgt anschließend eine weitere Regelung der Höhe des an die Bremszylinder 38 und 40 abzugebenden Betriebsdrucks in Abhängigkeit vom jeweils eingehenden Steuerdruck.

Wie es die Figuren 2A und 2B in Zusammenschau verdeutlichen, ist die austauschbare Kulisse 26 durch das Gehäuse 46 verdeckt und hinter einer Frontplatte des Gehäuses 46 angeordnet, da der Stellhebel 50 im Gebrauch der Maschine nicht mehr verstellt werden und deshalb auch nicht zugänglich sein darf. Bei aufgesetztem Gehäuse 46 (oder ggf. bei aufgesetztem frontseitigen Gehäusedeckel) sind weder die Kulisse 26 mit ihrer Werteskala 29 noch der Stellhebel 50 sichtbar oder zugänglich. Somit ist es auch sinnvoll, die gewählte Stellung des Stellhebels 50 zu fixieren und gegen nachträgliche Veränderungen zu sichern, bspw. zu verplomben, was durch die Fixierung oder Verplombung 27 in Fig. 1 angedeutet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Bremsanlage, Druckluftbremsanlage, pneumatische Bremsanlage
12 erster Druckanschluss, Steuerdruckanschluss ("Kupplungskopf gelb")
14 Steuerdruck
16 zweiter Druckanschluss, Vorratsdruckanschluss ("Kupplungskopf rot")
18 Vorratsdruck
20 Schlauchleitung
22 Automatisch lastabhängiger Bremskraftregler, ALB
24 Anhängerbremsventil
26 Kulisse
27 Fixierung, Verplombung, Plombe
28 Doppellöseventil, Doppellöseventil der Betriebs- und Feststellbremse
29 Skala, Werteskala
30 Druckbehälter, Druckkessel
32 Entwässerungsventil
34 Prüfanschluss
36 Bremsleitung
38 Bremszylinder
40 Bremszylinder
42 Zweiwegeventil
44 Bremsmodul
46 Gehäuse
48 Einrastpunkte
50 Stellhebel

## Patentansprüche

1. Mit Druck arbeitende Bremsanlage (10), vorzugsweise mit pneumatischem Druck arbeitende Bremsanlage (10) für eine landwirtschaftliche Arbeitsmaschine, bei der ein Anhängerbremsventil (24) zur bremskraftabhängigen Vorgabe einer Betätigungskraft von wenigstens zwei Rädern einer Maschinenachse zugeordneten Bremszylindern (38, 40) vorgesehen ist, **dadurch gekennzeichnet, dass** eine Eingangsstellgröße zur lastabhängigen Variation und/oder Drosselung eines Steuerdrucks der Radbremszylinder (38, 40) mittels eines einstellbaren automatisch lastabhängigen Bremskraftreglers (ALB 22) manuell in Abhängigkeit von einem aktuellen Gewicht oder einer aktuellen Achslast und/oder von einem Ausstattungszustand der landwirtschaftlichen Arbeitsmaschine vorgebbar ist, und **dass** dem insbesondere pneumatisch angesteuerten Anhängerbremsventil (24) ein manuell verstellbarer automatisch lastabhängiger Bremskraftregler (22) vorgeschaltet ist, der eine manuell einstellbare Variation, insbesondere eine gestufte oder variable Begrenzung des der dem Anhängerbremsventil (24) als Eingangsstellgröße zur Verfügung gestellten Steuerdrucks (14) ermöglicht.

2. Bremsanlage (10) nach Anspruch 1, bei der die Eingangsstellgröße zur Ansteuerung des Anhängerbremsventils (24) mittels des vorgeschalteten automatisch lastabhängigen Bremskraftreglers (22) variierbar ist.

3. Bremsanlage nach Anspruch 1 oder 2, bei welcher der automatisch lastabhängige Bremskraftregler (22) einen manuell betätigbaren, insbesondere manuell verschwenkbaren oder verschiebbaren Stellhebel (50) aufweist, der entlang einer Kulisse (26) verschiebar oder verschwenkbar ist, die mindestens einen Einrastpunkt (48) zur Definition wenigstens einer diskreten Position des Stellhebels (50) und damit im Zusammenhang stehender Druckregelverhältnisse aufweist.

4. Bremsanlage nach Anspruch 1 oder 2, bei welcher der automatisch lastabhängige Bremskraftregler (22) einen manuell betätigbaren, insbesondere manuell verschwenkbaren oder verschiebbaren Stellhebel (50) aufweist, der entlang einer Kulisse (26) verschiebar oder verschwenkbar ist, die mindestens eine Werteskala (29) zur Definition wenigstens einer diskreten Position des Stellhebels (50) und damit im Zusammenhang stehender Druckregelverhältnisse aufweist.

5. Bremsanlage nach Anspruch 3 und 4, bei welcher die Einrastpunkte (48) der Werteskala (29) zugeordnet und/oder mit dieser in Funktions- oder Wirkzusammenhang stehen, wobei die wenigstens eine diskrete Position des Stellhebels in einem Einrastpunkt (48) einem der Werte der Werteskala (29) zugeordnet ist.

6. Bremsanlage nach Anspruch 4 oder 5, bei der auf der Werteskala (29) mehrere Gewichtsbereiche dargestellt oder ihr zugeordnet sind, die ausstattungsabhängigen Gewichten und/oder Achslasten der Arbeitsmaschine zugeordnet sind oder mit diesen in Zusammenhang stehen, wobei insbesondere unterschiedliche Wertebereiche mit unterschiedlichen ausstattungsabhängigen Gewichten und/oder Achslasten der Arbeitsmaschine korrespondieren.

7. Bremsanlage nach einem der Ansprüche 3 bis 6, bei der die Kulisse (26) austauschbar innerhalb eines Gehäuse (46) eines zumindest den automatisch lastabhängigen Bremskraftregler (22) enthaltenden Bremsmoduls (44) angeordnet ist, wobei verschiedene Kulissen (26) in den Bremskraftregler einsetzbar sind, wobei diese Kulissen jeweils unterschiedlich positionierte Einrastpunkte (48) und/oder Werteskalen (29) zur Variation der den Stellhebel (50) festlegenden Positionen oder Schwenkstellungen aufweisen können.

8. Bremsanlage nach Anspruch 7, bei der die von der jeweiligen Kulisse (26) vorgegebene Position des Stellhebels (50) fixierbar und/oder gegen nachträgliche manuelle Veränderungen absicherbar ist.

9. Bremsanlage nach Anspruch 7 oder 8, bei welcher der Stellhebel (50) und die Kulisse (26) bei geschlossenem Gehäuse (46) und/oder in einem betriebsfertigen Zustand der Bremsanlage (10) von außen unzugänglich ist/sind, wobei insbesondere der Stellhebel (50) nicht erreichbar und/oder nicht manuell betätigbar ist.

10. Bremsanlage nach einem der Ansprüche 7 bis 9, bei welcher der Stellhebel (50) in seiner jeweils gewählten Position mittels einer Plombe (27) gegen Positionsveränderungen absicherbar oder gesichert ist.

11. Bremsanlage nach einem der Ansprüche 7 bis 9, bei welcher das zu Einstellzwecken und/oder zu Zwecken der Positionsveränderung des Stellhebels (50) und/oder zu Zwecken des Austauschs der Kulisse (26) öffenbare Gehäuse (46) mittels einer Plombe (27) gegen unerwünschtes Öffnen absicherbar oder gesichert ist.

12. Gezogene oder selbstfahrende landwirtschaftliche Arbeitsmaschine, die über mindestens eine Achse und mindestens ein gebremstes Rad verfügt, und die mit einer mit pneumatischem Druck arbeitenden Bremsanlage (10) gemäß einem der Ansprüche 1 bis 11 ausgestattet ist.

13. Gezogene oder selbstfahrende landwirtschaftliche Bodenbearbeitungsmaschine, die über mindestens zwei Achsen und mindestens vier gebremste Räder verfügt, und die mit einer mit pneumatischem Druck arbeitenden Bremsanlage (10) gemäß einem der Ansprüche 1 bis 11 ausgestattet ist.

14. Zugverbund, umfassend eine landwirtschaftliche Zugmaschine und einer daran angehängten und damit mechanisch sowie pneumatisch gekoppelten landwirtschaftliche Maschine gemäß einem der Ansprüche 12 oder 13, die mit einer mit pneumatischem Druck arbeitenden Bremsanlage (10) gemäß einem der Ansprüche 1 bis 11 ausgestattet ist.

15. Verfahren zur Einstellung einer mit pneumatischem Druck arbeitenden Bremsanlage (10) für eine landwirtschaftliche Arbeitsmaschine, die mit einem Anhängerbremsventil (24) zur bremskraftabhängigen Vorgabe einer Betätigungskraft von wenigstens zwei Rädern einer Maschinenachse zugeordneten Bremszylindern (38, 40) ausgestattet ist, **dadurch gekennzeichnet, daß** eine Eingangsstellgröße zur lastabhängigen Variation und/oder Drosselung eines Steuerdrucks der Radbremszylinder (38, 40) mittels eines einstellbaren automatisch lastabhängigen Bremskraftreglers (22) in Abhängigkeit von einem aktuellen Gewicht oder einer aktuellen Achslast und/oder von einem Ausstattungszustand der landwirtschaftlichen Arbeitsmaschine manuell vorgegeben wird, wobei dem insbesondere pneumatisch angesteuerten Anhängerbremsventil (24) ein manuell verstellbarer automatisch lastabhängiger Bremskraftregler (22) vorgeschaltet ist, der eine manuell einstellbare Variation, insbesondere eine gestufte oder variable Begrenzung des dem Anhängerbremsventil (24) als Eingangsstellgröße zur Verfügung gestellten Steuerdrucks (14) ermöglicht.

16. Verfahren nach Anspruch 15, bei dem die Eingangsstellgröße zur Ansteuerung des Anhängerbremsventils (24) mittels des vorgeschalteten automatisch lastabhängigen Bremskraftreglers (22) variiert werden kann.

17. Verfahren nach Anspruch 15 oder 16, bei dem der automatisch lastabhängige Bremskraftregler (22) einen manuell betätigbaren, insbesondere verschwenkbaren oder verschiebbaren Stellhebel (50) aufweist, der entlang einer Kulisse (26) verschiebar oder verschwenkbar ist, die mindestens einen Einrastpunkt (48) zur Definition wenigstens einer diskreten Position des Stellhebels (50) und damit im Zusammenhang stehender Druckregelverhältnisse aufweist, wobei die Kulisse (26) austauschbar an einem Gehäuse (46) eines zumindest den automatisch lastabhängigen Bremskraftregler (22) enthaltenden Bremsmoduls (44) angeordnet ist, und wobei verschiedene Kulissen (26) jeweils unterschiedlich positionierte Einrastpunkte (48) zur Variation der den Stellhebel (50) festlegenden Positionen oder Schwenkstellungen aufweisen können.

18. Verfahren nach Anspruch 15 oder 16, bei dem der automatisch lastabhängige Bremskraftregler (22) einen manuell betätigbaren, insbesondere verschwenkbaren oder verschiebbaren Stellhebel (50) aufweist, der entlang einer Werteskala (29) einer Kulisse (26) verschiebar oder verschwenkbar ist, wobei der Werteskala (29) mindestens ein Einrastpunkt (48) zur Definition wenigstens einer diskreten Position des Stellhebels (50) und damit im Zusammenhang stehender Druckregelverhältnisse zugeordnet ist, wobei die Kulisse (26) austauschbar an einem Gehäuse (46) eines zumindest den automatisch lastabhängigen Bremskraftregler (22) enthaltenden Bremsmoduls (44) angeordnet ist, und wobei verschiedene Kulissen (26) mit jeweils unterschiedlichen Werteskalen (29) jeweils unterschiedlich positionierte Einrastpunkte (48) zur Variation der den Stellhebel (50) festlegenden Positionen oder Schwenkstellungen aufweisen können.

19. Verfahren Anspruch 17 oder 18, bei dem unterschiedliche austauschbare Kulissen (26) mit jeweils unterschiedlichen Werteskalen (29) jeweils unterschiedlichen Ausstattungs- und/oder Belastungszuständen der landwirtschaftlichen Bodenbearbeitungsmaschine zugeordnet sind, und bei dem nach Bestimmung des aktuellen Ausstattungs- und/oder Belastungszustand und/oder des aktuellen Ausstattungszustandes der Arbeitsmaschine eine passende Kulissen (26) ausgewählt, in der Bremsanlage (10) eingebaut und der Stellhebel (50) nach Einstellung der passenden Position, die von der eingesetzten Kulisse (26) vorgegeben ist, in seiner Position fixiert und/oder gegen nachträgliche manuelle Veränderungen abgesichert wird.

20. Verfahren nach Anspruch 19, bei dem der Stellhebel (50) und die Kulisse (26) bei geschlossenem Gehäuse (46) und/oder in einem betriebsfertigen Zustand der Bremsanlage (10) von außen unzugänglich ist/sind, wobei insbesondere der Stellhebel (50) nicht erreichbar ist und/oder nicht manuell betätigt werden kann.

## Claims

1. A pressure-operated brake system (10), preferably a pneumatic-pressure-operated brake system (10) for an agricultural work machine, in which a trailer brake valve (24) is provided for the brake-force-dependent specification of an actuating force of brake cylinders (38, 40) assigned to at least two wheels of a machine axle, **characterised in that** an input control variable is manually specifiable for the load-dependent variation and/or throttling of a control pressure of the wheel brake cylinders (38, 40) by means of an adjustable automatic load-dependent brake pressure regulator (ALB 22) based on a current weight or a current axle load and/or on an equipment state of the agricultural work machine, and **in that** a manually adjustable automatic load-dependent brake pressure regulator (22) is provided upstream of the, in particular, pneumatically actuated trailer brake valve (24), with the brake pressure regulator (22) enabling a manually adjustable variation, in particular, a staged or variable limitation of the control pressure (14) provided as input control variable to the trailer brake valve (24).

2. The brake system (10) according to claim 1, in which the input control variable for the actuation of the trailer brake valve (24) is variable by means of the upstream automatic load-dependent brake pressure regulator (22).

3. The brake system according to claim 1 or 2, in which the automatic load-dependent brake pressure regulator (22) has a manually actuable, in particular, a manually swivelable or shiftable adjustment lever (50), which is shiftable or swivelable along a snap-in plate (26) having at least one snap-in point (48) for the definition of at least one discrete position of the adjustment lever (50) and therewith associated pressure control conditions.

4. The brake system according to claim 1 or 2, in which the automatic load-dependent brake pressure regulator (22) has a manually actuable, in particular, a manually swivelable or shiftable adjustment lever (50), which is shiftable or swivelable along a snap-in plate (26) having at least one value scale (29) for the definition of at least one discrete position of the adjustment lever (50) and therewith associated pressure control conditions.

5. The brake system according to claim 3 and 4, in which the snap-in points (48) are assigned to the value scale (29) and/or are in functional or operative connection therewith, wherein the at least one discrete position of the adjustment lever in one snap-in point (48) is assigned to one of the values of the value scale (29).

6. The brake system according to claim 4 or 5, in which a plurality of weight ranges are displayed on the value scale (29) or assigned thereto, which weight ranges are assigned to or associated with equipment-dependent weights and/or axle loads of the work machine, wherein, in particular, different value ranges correspond to different equipment-dependent weights and/or axle loads of the work machine.

7. The brake system according to one of the claims 3 to 6, in which the snap-in plate (26) is arranged in an exchangeable manner inside a housing (46) of a brake module (44) containing at least the automatic load-dependent brake pressure regulator (22), wherein different snap-in plates (26) are insertable into the brake pressure regulator, wherein these snap-in plates each have differently positioned snap-in points (48) and/or value scales (29) for the variation of the positions or swivel positions securing the adjustment lever (50).

8. The brake system according to claim 7, in which the position of the adjustment lever (50) specified by the particular snap-in plate (26) is fixable and/or securable against subsequent manual changes.

9. The brake system according to claim 7 or 8, in which the adjustment lever (50) and the snap-in plate (26) is/are inaccessible from outside when the housing (46) is closed and/or when the brake system is in a ready-for-use state (10), wherein, in particular, the adjustment lever (50) is not accessible and/or not manually actuable.

10. The brake system according to one of the claims 7 to 9, in which the adjustment lever (50) is securable or secured in its particular selected position by means of a seal (27) against position changes.

11. The brake system according to one of the claims 7 to 9, in which the housing (46), which is openable for purposes of adjustment and/or for purposes of position change of the adjustment lever (50) and/or for purposes of exchange of the snap-in plate (26), is securable or secured by means of a seal (27) against unwanted opening.

12. A towed or self-propelled agricultural work machine, which has at least one axle and at least one braked wheel, and which is equipped with a pneumatic-pressure-operated brake system (10) according to one of the claims 1 to 11.

13. A towed or self-propelled agricultural soil-working machine, which has at least two axles and at least four braked wheels, and which is equipped with a pneumatic-pressure-operated brake system (10) according to one of the claims 1 to 11.

14. A tractor-trailer combination, comprising an agricultural towing machine and an agricultural machine according to one of the claims 12 or 13, which agricultural machine is hitched and thus mechanically as well as pneumatically coupled to the towing machine, and which agricultural machine is equipped with a pneumatic-pressure-operated brake system (10) according to one of the claims 1 to 11.

15. A method for the adjustment of a pneumatic-pressure-operated brake system (10) for an agricultural work machine, which is equipped with a trailer brake valve (24) for the brake-force-dependent specification of an actuating force of brake cylinders (38, 40) assigned to at least two wheels of a machine axle, **characterised in that** an input control variable is manually specified for the load-dependent variation and/or throttling of a control pressure of the wheel brake cylinders (38, 40) by means of an adjustable automatic load-dependent brake pressure regulator (22) based on a current weight or a current axle load and/or on an equipment state of the agricultural work machine, wherein the manually adjustable automatic load-dependent brake pressure regulator (22) is provided upstream of the, in particular, pneumatically actuated trailer brake valve (24), with the brake pressure regulator (22) enabling a manually adjustable variation, in particular, a staged or variable limitation of the control pressure (14) provided as input control variable to the trailer brake valve (24).

16. The method according to claim 15, in which the input control variable for the actuation of the trailer brake valve (24) can be varied by means of the upstream automatic load-dependent brake pressure regulator (22).

17. The method according to claim 15 or 16, in which the automatic load-dependent brake pressure regulator (22) has a manually actuable, in particular, a swivelable or shiftable adjustment lever (50), which is shiftable or swivelable along a snap-in plate (26) having at least one snap-in point (48) for the definition of at least one discrete position of the adjustment lever (50) and therewith associated pressure control conditions, wherein the snap-in plate (26) is arranged in an exchangeable manner at a housing (46) of a brake module (44) containing at least the automatic load-dependent brake pressure regulator (22), and wherein different snap-in plates (26) can each have differently positioned snap-in points (48) for the variation of the positions or swivel positions securing the adjustment lever (50).

18. The method according to claim 15 or 16, in which the automatic load-dependent brake pressure regulator (22) has a manually actuable, in particular, a swivelable or shiftable adjustment lever (50), which is shiftable or swivelable along a value scale (29) of a a snap-in plate (26), wherein the value scale (29) has at least one snap-in point (48) for the definition of at least one discrete position of the adjustment lever (50) and therewith associated pressure control conditions assigned to it, wherein the snap-in plate (26) is arranged in an exchangeable manner at a housing (46) of a brake module (44) containing at least the automatic load-dependent brake pressure regulator (22), and wherein different snap-in plates (26) with different value scales (29) each can each have differently positioned snap-in points (48) for the variation of the positions or swivel positions securing the adjustment lever (50).

19. The method according to claim 17 or 18, in which different exchangeable snap-in plates (26) with different value scales (29) each are each assigned to different equipment states and/or load states of the agricultural soil-working machine, and in which, after the determination of the current equipment state and/or load state and/or of the current equipment state of the work machine, an appropriate snap-in plate (26) is selected and built into the brake system (10), and, after the adjustment of the appropriate position specified by the inserted snap-in plate (26), the adjustment lever (50) is fixed in its position and/or is secured against subsequent manual changes.

20. The method according to claim 19, in which the adjustment lever (50) and the snap-in plate (26) is/are inaccessible from outside when the housing (46) is closed and/or when the brake system is in a ready-for-use state (10), wherein, in particular, the adjustment lever (50) is not accessible and/or cannot be manually actuated.

## Revendications

1. Système de freinage fonctionnant sous pression (10), de préférence système de freinage fonctionnant sous pression pneumatique (10), pour une machine agricole, dans lequel une soupape de frein de remorque (24) est prévue pour prédéfinir, en fonction de la force de freinage, une force d'actionnement de cylindres de frein (38, 40) associés à au moins deux roues d'un essieu de la machine, **caractérisé en ce qu'**une grandeur de réglage d'entrée pour la variation et/ou l'étranglement, en fonction de la charge, d'une pression de commande des cylindres de frein de roue (38, 40) peut être prédéfinie manuellement, au moyen d'un régulateur de force de freinage (ALB 22) réglable et dépendant automatiquement de la charge, en fonction d'un poids actuel ou d'une charge actuelle par essieu et/ou en fonction d'un état d'équipement de la machine agricole, et **en ce qu'**en amont de la soupape de frein de remorque (24), commandée notamment pneumatiquement est monté un régulateur de force de freinage (22) réglable manuellement dépendant automatiquement de la charge, qui permet une variation réglable manuellement, notamment une limitation échelonnée ou variable de la pression de commande (14) mise à disposition de la soupape de frein de remorque (24) comme grandeur de réglage d'entrée.

2. Système de freinage (10) selon la revendication 1, dans lequel la grandeur de réglage d'entrée pour la commande de la soupape de frein de remorque (24) peut être variée au moyen du régulateur de force de freinage (22) monté en amont et dépendant automatiquement de la charge.

3. Système de freinage selon la revendication 1 ou 2, dans lequel le régulateur de force de freinage (22) dépendant automatiquement de la charge présente un levier de réglage (50) pouvant être actionné manuellement, notamment pivoté ou déplacé manuellement, lequel peut être déplacé ou pivoté le long d'une coulisse (26) qui présente au moins un point d'enclenchement (48) pour définir au moins une position discrète du levier de réglage (50) et des rapports de régulation de pression en rapport avec celle-ci.

4. Système de freinage selon la revendication 1 ou 2, dans lequel le régulateur de force de freinage (22) dépendant automatiquement de la charge présente un levier de réglage (50) pouvant être actionné manuellement, notamment pivoté ou déplacé manuellement, lequel peut être déplacé ou pivoté le long d'une coulisse (26) qui présente au moins une échelle de valeurs (29) pour définir au moins une position discrète du levier de réglage (50) et des rapports de régulation de pression en rapport avec celle-ci.

5. Système de freinage selon la revendication 3 et 4, dans lequel les points d'enclenchement (48) sont associés à l'échelle de valeurs (29) et/ou sont en relation fonctionnelle ou active avec celle-ci, ladite au moins une position discrète du levier de commande dans un point d'enclenchement (48) étant associée à l'une des valeurs de l'échelle de valeurs (29).

6. Système de freinage selon la revendication 4 ou 5, dans lequel plusieurs zones de poids sont représentées sur l'échelle de valeurs (29) ou lui sont associées, les poids et/ou charges par essieu dépendant de l'équipement sont associés à la machine agricole ou sont en rapport avec celle-ci, notamment des zones de valeurs différentes correspondant à des poids et/ou charges par essieu dépendant de l'équipment de la machine agricole différents.

7. Système de freinage selon l'une quelconque des revendications 3 à 6, dans lequel la coulisse (26) est agencée de manière interchangeable au sein d'un boîtier (46) d'un module de freinage (44) contenant au moins le régulateur de force de freinage (22) dépendant automatiquement de la charge, différentes coulisses (26) pouvant être insérées dans le régulateur de force de freinage, lesdites coulisses (26) pouvant présenter chacune des points d'enclenchement (48) positionnés différemment et/ou des échelles de valeur (29) pour faire varier les positions ou les positions de pivotement fixant le levier de réglage (50).

8. Système de freinage selon la revendication 7, dans lequel la position du levier de réglage (50) prédéfinie par la coulisse respective (26) peut être fixée et/ou protégée contre des modifications manuelles ultérieures.

9. Système de freinage selon la revendication 7 ou 8, dans lequel le levier de réglage (50) et la coulisse (26) n'est/ne sont pas accessible(s) de l'extérieur lorsque le boîtier (46) est fermé et/ou lorsque le système de freinage (10) est prêt à fonctionner, le levier de réglage (50) notamment n'étant pas accessible et/ou ne pouvant pas être actionné manuellement.

10. Système de freinage selon l'une quelconque des revendications 7 à 9, dans lequel le levier de réglage (50) peut être protégé ou est protégé au moyen d'un plomb (27) contre les changements de position dans sa position choisie respective.

11. Système de freinage selon l'une quelconque des revendications 7 à 9, dans lequel le boîtier (46), qui peut être ouvert à des fins de réglage et/ou pour changer la position du levier de réglage (50) et/ou pour remplacer la coulisse (26), peut être protégé ou est protégé contre une ouverture non souhaitée au moyen d'un plomb (27).

12. Machine de travail agricole tractée ou automotrice qui dispose d'au moins un essieu et d'au moins une roue avec frein, et qui est équipée d'un système de freinage fonctionnant sous pression pneumatique (10) selon l'une quelconque des revendications 1 à 11.

13. Machine agricole de travail du sol, tractée ou automotrice, qui dispose d'au moins deux essieux et d'au moins quatre roues avec frein, et qui est équipée d'un système de freinage fonctionnant sous pression pneumatique (10) selon l'une quelconque des revendications 1 à 11.

14. Ensemble de traction routier, comprenant un tracteur routier agricole et une machine agricole qui y est attachée et ainsi couplée de manière mécanique ainsi que pneumatique, selon l'une quelconque des revendications 12 ou 13, qui est équipée d'un système de freinage (10) fonctionnant sous pression pneumatique selon l'une quelconque des revendications 1 à 11.

15. Procédé de réglage d'un système de freinage (10) fonctionnant sous pression pneumatique pour une machine de travail agricole qui est équipée d'une soupape de frein de remorque (24) pour prédéfinir, en fonction de la force de freinage, une force d'actionnement de cylindres de frein (38, 40) associés à au moins deux roues d'un essieu de la machine, **caractérisé en ce qu'**une grandeur de réglage d'entrée pour la variation et/ou l'étranglement, en fonction de la charge, d'une pression de commande des cylindres de frein de roue (38, 40) peut être prédéfinie manuellement, au moyen d'un régulateur de force de freinage (22) réglable et dépendant automatiquement de la charge, en fonction d'un poids actuel ou d'une charge actuelle par essieu et/ou en fonction d'un état d'équipement de la machine de travail agricole, un régulateur de force de freinage (22) réglable manuellement, dépendant automatiquement de la charge étant monté en amont de la soupape de frein de remorque (24), commandée notamment pneumatiquement, lequel régulateur permet une variation réglable manuellement, notamment une limitation échelonnée ou variable de la pression de commande (14) mise à disposition de la soupape de frein de remorque (24) comme grandeur de réglage d'entrée.

16. Procédé selon la revendication 15, dans lequel la grandeur de réglage d'entrée pour la commande de la soupape de frein de remorque (24) peut être variée au moyen du régulateur de force de freinage (22) monté en amont et dépendant automatiquement de la charge.

17. Procédé selon la revendication 15 ou 16, dans lequel le régulateur de force de freinage (22) dépendant automatiquement de la charge présente un levier de réglage (50) qui peut être actionné manuellement, notamment pivoté ou déplacé , et qui peut être déplacé ou pivoté le long d'une coulisse (26) qui présente au moins un point d'enclenchement (48) pour définir au moins une position discrète du levier de réglage (50) et des rapports de réglage de pression en rapport avec celle-ci, ladite coulisse (26) étant agencée de manière interchangeable sur un boîtier (46) d'un module de freinage (44) contenant au moins le régulateur de force de freinage (22) dépendant automatiquement de la charge, et diverses coulisses (26) pouvant présenter des points d'enclenchement (48) à des positions diverses respectives pour faire varier les positions ou positions de pivotement définissant le levier de réglage (50).

18. Procédé selon la revendication 15 ou 16, dans lequel le régulateur de force de freinage (22) dépendant automatiquement de la charge présente un levier de réglage (50) qui peut être actionné manuellement, notamment pivoté ou déplacé , et qui peut être déplacé ou pivoté le long d'une échelle de valeurs (29) d'une coulisse (26), au moins un point d'enclenchement (48) servant à définir au moins une position discrète du levier de réglage (50) et des rapports de réglage de pression en rapport avec celle-ci étant associé à ladite échelle de valeurs (29), ladite coulisse (26) étant agencée de manière interchangeable sur un boîtier (46) d'un module de freinage (44) contenant au moins le régulateur de force de freinage (22) dépendant automatiquement de la charge, et différentes coulisses (26) avec différentes échelles de valeurs (29) respectives pouvant présenter des points d'enclenchement (48) à des positions différentes respectives pour faire varier les positions ou positions de pivotement définissant le levier de réglage (50).

19. Procédé selon la revendication 17 ou 18, dans lequel différentes coulisses interchangeables (26) avec différentes échelles de valeurs (29) respectives sont respectivement associées à différents états d'équipement et/ou de charge de la machine agricole de travail du sol, et dans lequel, une fois que l'état d'équipement et/ou de la charge actuel, et/ou l'état d'équipement actuel de la machine de travail a/ont été déterminé(s), une coulisse (26) adaptée est sélectionnée, montée dans le système de freinage (10), et le levier de réglage (50) est fixé dans sa position, après réglage de la position adaptée qui est prédéfinie par la coulisse (26) mise en oeuvre, et/ou est protégé contre des modifications manuelles ultérieures.

20. Procédé selon la revendication 19, dans lequel le levier de réglage (50) et la coulisse (26) n'est/ne sont pas accessible(s) de l'extérieur lorsque le boîtier (46) est fermé et/ou lorsque le système de freinage (10) est prêt à fonctionner, le levier de réglage (50) notamment n'étant pas accessible et/ou ne pouvant pas être actionné manuellement.
